# EUROPEAN PATENT APPLICATION

(11) **EP 1 876 684 A2**
(43) Date of publication of application: **09.01.2008**
(21) Application number: 07012597.6
(22) Date of filing: 27.06.2007
(51) Int. Cl.: H02K 3/34, H02K 15/10, H02K 41/02

(54) **Electric motor and method for producing electric motor**

(30) Priority: 06.07.2006 JP 2006186725
(71) Applicant: Fanuc Ltd, Minamitsuru-gun, Yamanashi 401-0597 (JP)
(72) Inventor: Shimura, Yoshifumi, Fujiyoshida-shi Yamanashi 403-0017 (JP); Kimijima, Masami, Minamitsuru-gun Yamanashi 401-0511 (JP)
(74) Representative: Schmidt, Steffen

(57) **Abstract**

An electric motor (10) comprising a stator core (11) in which slots (12) are formed, and a coil (20) is inserted in the slots. The slots are filled with an insulating resin (3), and the surface of the coil is coated with a coating layer, such as a phenol type epoxy powdery coating material or a phenol type varnish material. This prevents the insulating layer of the coil from being corroded by a strong alkaline liquid. The coating layer may have a thickness nearly equal to the thickness of an insulating paper. Further, the coating layer may have a thickness nearly equal to, or larger than, the thickness of the insulating paper.

## Description

### BACKGROUND OF THE INVENTION

### 1. Field of the Invention

The present invention relates to an electric motor, and specifically to a linear motor or the like, and to a method for producing an electric motor.

### 2. Description of the Related Art

Linear motors have been used to achieve linear motion and positioning by moving permanent magnets and armature coils relative to each other. For example, linear motors have been used in steppers and precision machine tools.

When the electric motor is assembled, insulating paper is placed in the slots of a stator core, a coil is inserted in the slots, and thereafter, the slots are filled with an insulating resin. The coil inserted in the slots is formed by winding an electrically conducting wire which is covered with an insulating layer. In forming the coil, however, the insulating layer of the electrically conducting wire is often partly exfoliated to form pinholes.

When the electric motor having the above coil is used in an environment where water is present in relatively large amounts, such as in an environment where a water-soluble cutting solution is used, or when the coil is cooled in water, water often infiltrates through the pinholes resulting in dielectric breakdown.

Japanese Unexamined Patent Publication No. 2004-297845 discloses forming a silicone resin coating on the surface of a coil after the coil has been formed. Due to the foregoing water, cannot infiltrate into the coil, thereby avoiding a degradation of insulation.

In recent years, electric motors have in many cases been used in an environment where a strongly alkaline water-soluble cutting solution having, for example a pH of 9 and is constantly being splashed and where the cycle time of the motor is short, and where the operating ratio is high. In such a case, a strongly alkaline cutting solution that is splashed on the motor, attacks the insulating resin that protects the electric motor, so that small gaps are formed in the insulating resin and in the boundary portions thereof. Thus, the strongly alkaline cutting solution reaches the coil through the gaps.

The insulating layer of the electrical wire forming the coil 20 is usually made from, for example, an amide-imide resin, and is relatively resistant to chemicals. However, a strongly alkaline cutting solution is capable of corroding the above insulating layer, thereby deteriorating the insulation and causing a dielectric breakdown.

Even when the coil surfaces are coated with a silicone resin like the coil disclosed in Japanese Unexamined Patent Publication No. 2004-297845, the strongly alkaline cutting solution may corrode the film of the silicone resin. In this case, the insulating layer is corroded after the silicone resin film is corroded, and as a result dielectric breakdown similarly occurs.

The present invention was accomplished in view of the above-mentioned circumstances and has an object of providing an electric motor, which is capable of preventing the insulating layer from being corroded even in an environment where a strongly alkaline liquid is used, and a method for producing the above electric motor.

### SUMMARY OF THE INVENTION

In order to achieve the above object according to a first aspect, there is provided an electric motor comprising a stator core, in which slots are formed, and a coil formed by an electrical wire covered with an insulating layer and inserted in the slots, wherein the slots are filled with an insulating resin, and the surface of the coil is coated with a coating layer.

A second aspect is concerned with the first aspect, wherein the coating layer is made from a phenol type epoxy powdery coating material or a phenol type varnish material.

That is, in the first and second aspects, the phenol type epoxy powdery coating material or the phenol type varnish material are relatively resistant to a strong alkaline liquid and are used as a coating layer. Therefore, even when the insulating resin is corroded in an environment that uses a strong alkaline liquid, the alkaline liquid only reaches the surface of the coating layer, i.e., the coating layer and the insulating layer of the electrical wire forming the coil are not corroded. This prevents corrosion of the insulating layer even in an environment where a strong alkaline liquid is used, and therefore the insulation does not deteriorate causing a dielectric breakdown.

A third aspect is concerned with the first or second aspect, wherein the thickness of the coating layer is nearly equal to, or larger than, the thickness of an insulating paper.

That is, in the third aspect, an insulating paper arranged between the stator core and the coil can be excluded. Preferably, the coating layer has a thickness of about 0.1 mm to about 0.5 mm. When the thickness of the insulating paper is, for example, 0.2 mm, it is preferable that the thickness of the coating layer is not smaller than about 0.2 mm.

A fourth aspect is concerned with any one of the first to third aspects, wherein the coil is formed by a self welding type wire.

That is, in the fourth aspect, gaps between conducting wires forming the coil can be adhered to.

A fifth aspect is concerned with any one of the first to fourth aspects, wherein the coil is formed around a resin bobbin.

That is, in the fifth aspect, it is possible to easily form the coil.

According to a sixth aspect, there is provided a method for producing an electric motor comprising coating the surface of a coil with a coating layer, the coil being formed of an electrical wire covered with an insulating layer, inserting the coil in the slots formed into the stator core, and filling the slots with an insulating resin.

A seventh aspect is concerned with the sixth aspect, wherein the coating layer is made from a phenol type epoxy powdery coating material or a phenol type varnish material.

That is, in the sixth and seventh aspects, the phenol type epoxy powdery coating material or the phenol type varnish material being relatively resistant to the strongly alkaline liquid are used as a coating layer. Therefore, even when the insulating resin is corroded in an environment using a strong alkaline liquid, the alkaline liquid only reaches the surface of the coating layer, i.e., the coating layer and the insulating layer of the electrical wire forming the coil are not corroded. This prevents corrosion of the insulating layer even in an environment where the strongly alkaline liquid is used, and therefore the insulation does not deteriorate causing a dielectric breakdown.

The above objects, features, advantages as well as other objects, features and advantages of the invention will become more obvious from the detailed description of representative embodiments of the invention shown in the accompanying drawings.

### BRIEF DESCRIPTION OF THE DRAWINGS

Fig. 1 is a sectional view of an electric motor according to a first embodiment of the present invention;
Fig. 2a is a first view illustrating a method for producing the electric motor shown in Fig. 1;
Fig. 2b is a second view illustrating a method for producing the electric motor shown in Fig. 1;
Fig. 2c is a third view illustrating a method for producing the electric motor shown in Fig. 1;
Fig. 3 is a sectional view illustrating a coil of the electric motor shown in Fig. 1;
Fig. 4 is a diagram illustrating the relationship between the dipping time and insulation resistance;
Fig. 5a is a front view when the coil of the electric motor according to the invention is applied to a bobbin;
Fig. 5b is a sectional view when the coil of the electric motor according to the invention is applied to the bobbin;
Fig. 6 is a view when the coil of the electric motor according to the invention is applied to a rotary type stator core;
Fig. 7a is a first view illustrating a method for producing the electric motor according to a second embodiment of the present invention;
Fig. 7b is a second view illustrating a method for producing the electric motor according to the second embodiment of the present invention; and
Fig. 7c is a third view illustrating a method for producing the electric motor according to the second embodiment of the present invention.

### DETAILED DESCRIPTION

The embodiments of the invention will now be described with reference to the accompanying drawings in which the same members are denoted by the same reference numerals. In the drawings, the scales have been suitably varied for easy comprehension.

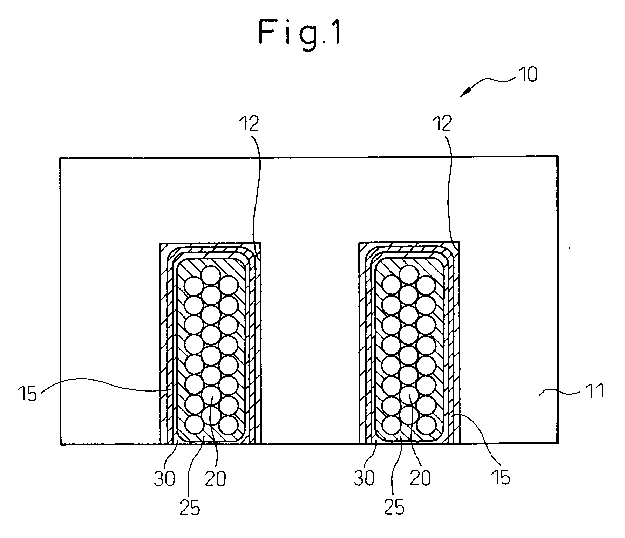

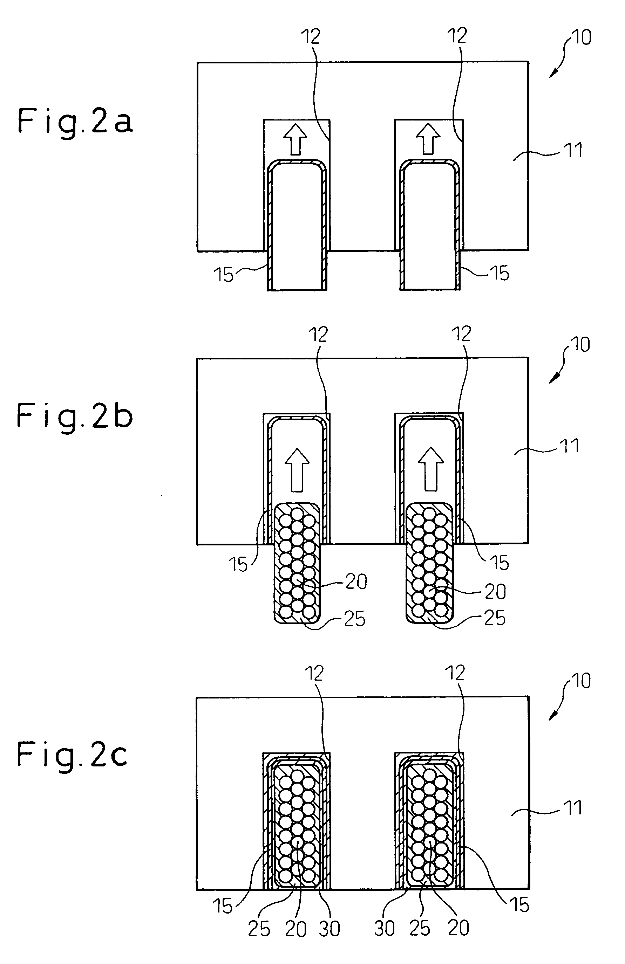

Fig. 1 is a sectional view of an electric motor according to a first embodiment of the present invention, and Figs. 2a to 2c are views illustrating a method for producing the electric motor shown in Fig. 1. As shown in Fig. 1, a plurality of slots 12, for example two slots 12 are formed in a stator core 11 of a linear motor 10.

In fabricating the electric motor 10, an insulating paper 15 is inserted along the inner surfaces of each of the slots 12 as shown in Fig. 2a. The insulating paper 15 is of a shape corresponding to the inner surfaces of the slots 12, and has a thickness of, for example, about 0.2 mm. Then, as shown in Fig. 2b, a coil 20 formed in advance is inserted into the space inside the insulating paper 15. Thereafter, as shown in Fig. 2c, the slots 12 are filled with an insulating resin 30 and are molded. Here, as shown, the gaps between the inlets of the slots 12 and the coil 20, are also molded with the insulating resin 30.

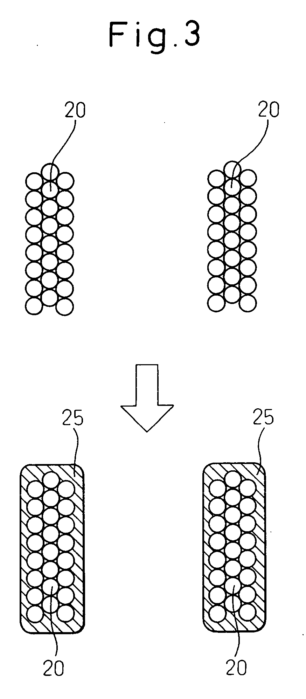

Fig. 3 is a sectional view illustrating the coil of the electric motor shown in Fig. 1. The coil 20 is formed by winding electrical wire covered with an insulating layer, such as an enamel layer. In the present invention as shown in Figs. 3 and 1, after the coil 20 is formed, the surface of the coil 20 is covered with a coating layer 25 made from a specific material, and when the coil 20 is assembled in the stator core 11 as shown in Fig. 1, the coating layer 25 is positioned between the coil 20 and the insulating resin 30.

The coating layer 25 is formed by fluidized dipping, in which the coil 20 is heated to a predetermined temperature and passed through a material for forming the coating layer 25, and as a result the coating layer 25 is formed on the surface of the coil 20. The coating layer 25 according to the invention is made from a material which is relatively resistant to a strongly alkaline liquid, such as a cutting solution.

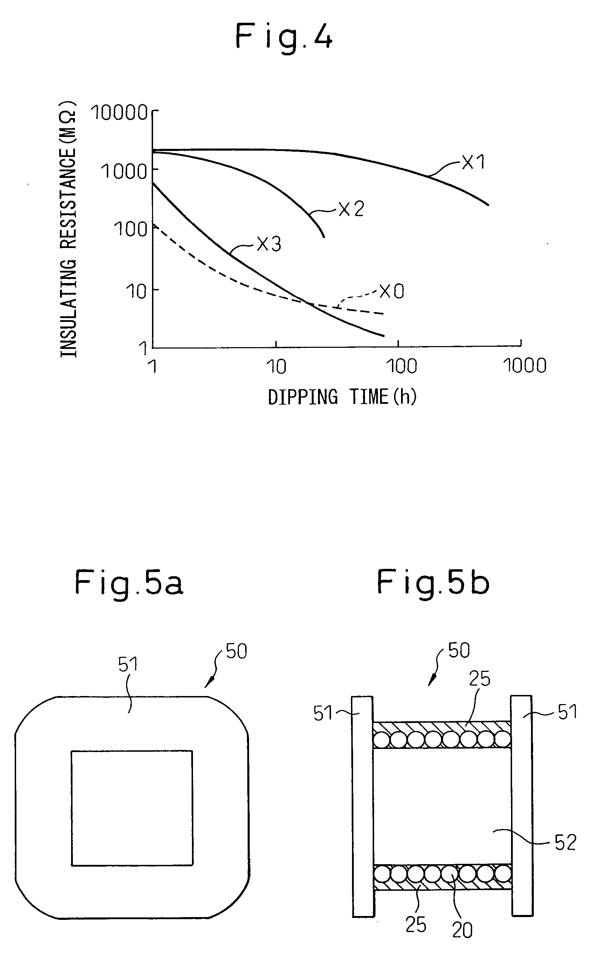

Fig. 4 is a diagram illustrating the relationship between the dipping time for dipping the coil 20 in a strongly alkaline liquid, or in this case, a cutting solution having a pH of 10 and the insulating resistance. In Fig. 4, the ordinate represents the insulating resistance of the coil 20 and the abscissa represents the dipping time of the coil 20. To obtain a result promptly, the temperature of the cutting solution used in Fig. 4 has been elevated higher than a normally used temperature, and in this case, has been elevated to about 80 degrees.

In Fig. 4, broken line X0 show a relationship of when no coating layer 25 has been formed. Solid line X1 shows a relationship of when the coating layer 25 is made from a phenol type epoxy powdery coating material, solid line X2 shows a relationship of when the coating layer 25 is made from an epoxy powder, and solid line X3 shows a relationship of when the coating layer 25 is made from an epoxy ester varnish.

As can be seen from broken line X0 in Fig. 4, the initial insulating resistance of when no coating layer 25 has been formed is about 100 MΩ and gradually decreases with time. Referring to solid line X3, representing a case where the coating layer 25 is formed from the epoxy ester varnish, the insulating resistance is at first, considerably greater than that of broken line X0. However, as the dipping time exceeds 10 hours, the insulating resistance of the solid line X3 becomes smaller than that of broken line X0.

On the other hand, referring to solid line X2 which represents a case where the coating layer 25 is formed from the epoxy powder, insulating resistance is considerably greater than that of broken line X0 and solid line X1, and does not decrease very much until the dipping time exceeds 10 hours. However, in this case, the insulating resistance sharply decreases as the dipping time exceeds 10 hours.

Referring to the solid line X1 when the coating layer 25 is formed from the phenol type epoxy coating material, from the beginning the insulating resistance is not smaller than 1000 MΩ, and is maintained at 1000 MΩ even after 100 hours of the dipping time.

Therefore, the present invention employs a phenol type epoxy powdery coating material as a material of the coating layer 25. In this case, even when the motor 10 of the present invention is used in an environment where a strong alkaline liquid is splashed, it only reaches the surface of the coating layer 25 and the coating layer 25 is not corroded. Accordingly, a strong alkaline liquid does not reach the insulating layer of the coil 20, i.e., the insulating layer of the coil 20 is not corroded. Namely, the present invention prevents the deterioration of insulation and dielectric breakdown. Though not shown, it can be understood that a similar effect is obtained even when the coating layer 25 is formed by the phenol type varnish material.

Further, as described with reference to solid line X2, when the coating layer 25 is made from an epoxy powder, some resistance to the strong alkaline liquid can be obtained. Therefore, the coating layer 25 may be formed by the epoxy powder being encompassed in the scope of the present invention.

As described above, when the coil 20 is formed by winding the electrical wire, often the insulating layer of the electrical wire is partially exfoliated to form pinholes. However, in the present invention, since the surface of the coil 20 is coated with the above coating layer 25, the pinholes are filled with the coating layer 25. Therefore, the present invention prevents corrosion of the insulating paper even when pinholes are formed.

It is preferable that the electrical wire forming the coil 20 is a self welding type wire. The self welding type wire is an electrical wire having an insulating self welding type layer. In this case, the coil 20 is formed from the self welding type wire and is heated up to a predetermined temperature. Due to the foregoing, the self welding type layer of the self welding type wire melts and adheres to the self welding type layer of the neighboring self welding type wire. The above adhering operation occurs over the whole coil 20. Therefore, when the self welding type wire is used, gaps among the wires of the coil 20 are adhered to and a more rigid coil 20 is formed.

Figs. 5a and 5b are a front and sectional view of when the coil of the motor of the present invention is applied to a bobbin. As shown, the coil 20 is wound around the peripheral surface of the sleeve 52 positioned between the two flanges 51 of the bobbin 50. The coating layer 25 is similarly formed on the surface of the coil 20. As shown, the thickness of the coating layer 25 is minimal so as to not reach the edges of the flanges 51. If the above bobbin is used, it will be obvious that the similar effect as described above can be obtained.

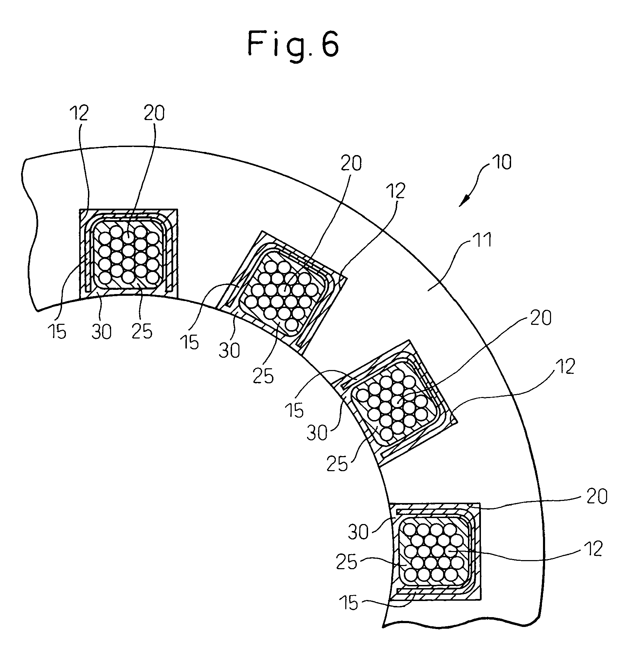

Fig. 6 is a view of when the coil of the motor of the present invention is applied to the rotary type stator core. In Fig. 6, a plurality of slots 12 are formed in the inner peripheral surface of the annular stator core 11 with regular intervals. In a similar manner as described above, insulating paper 15 is arranged in the slots 12, the coil 20 having the coating layer 25 is inserted therein, and thereafter, the slots 12 are molded with the insulating resin 30. In this case, it will be obvious that the similar effect as described above with reference to Fig. 1 can be obtained.

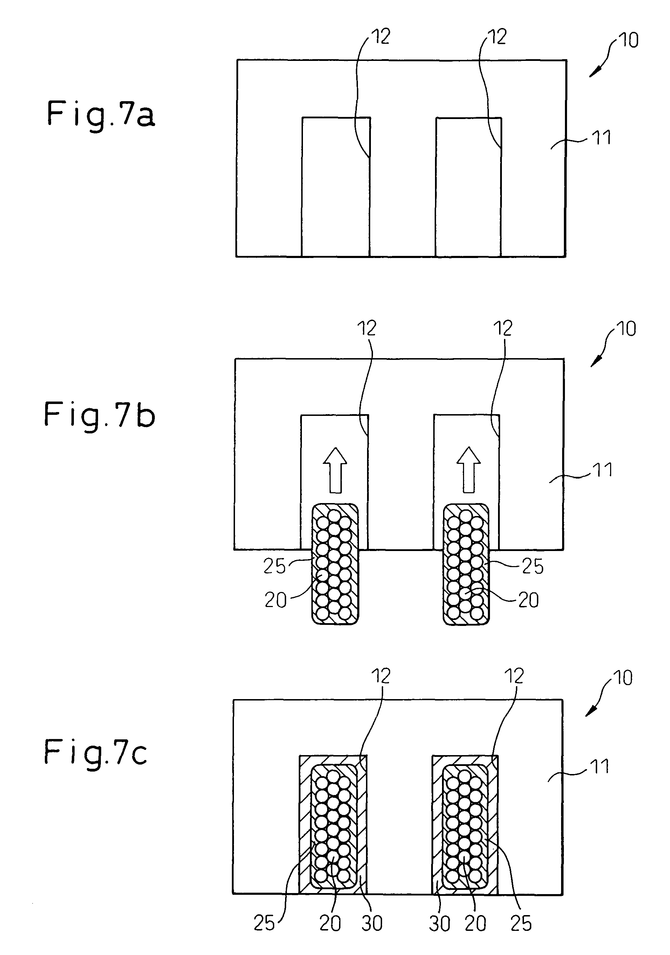

Figs. 7a to 7c are views illustrating a method for producing the motor according to a second embodiment of the invention. In the second embodiment, as can be seen from these drawings, no insulating paper 15 is arranged in the slots 12 of the stator core 11. That is, the coil 20 having the coating layer 25 is directly inserted in the slots 12, and thereafter, the slots 12 are filled with insulating resin 30.

According to the second embodiment, insulating paper 15 not used, and the thickness of the coating layer 25 formed on the coil 20 is increased correspondingly. The coating layer has a thickness of about 0.1 mm to about 0.5 mm. As described above, when the insulating paper has a thickness of, for example 0.2 mm, it is preferable that the coating layer has a thickness of not less than about 0.2 mm. By not using the insulating paper 15 as described above, working time can be shortened, and the cost of the insulating paper 15 can be saved.

Though the invention has been described above with reference to typical embodiments, a person skilled in the art will be able to understand that the above modifications, various other modifications, omission and addition can be made without departing from the scope of the present invention.

## Claims

1. An electric motor formed comprising a stator core (11), in which slots (12) are, and a coil (20) formed by an electrical wire covered with an insulating layer and inserted in said slots (12); **characterized in that**
said slots (12) are filled with an insulating resin; and
the surface of said coil (20) is coated with a coating layer (25).

2. The electric motor according to claim 1, wherein said coating layer (25) is made from a phenol type epoxy powdery coating material or a phenol type varnish material.

3. The electric motor according to claim 1 or 2, wherein the thickness of the coating layer (25) is nearly equal to, or larger than, the thickness of an insulating paper.

4. The electric motor according to any one of claims 1 to 3, wherein said coil (20) is formed by a self welding type wire.

5. The electric motor according to any one of claims 1 to 4, wherein said coil (20) is formed around a resin bobbin.

6. A method for producing an electric motor comprising:
coating the surface of a coil (20) with a coating layer (25), the coil (20) being formed by an electrical wire covered with an insulating layer;
inserting said coil (20) into slots (12) formed in the stator core (11); and
filling said slots (12) with an insulating resin (30).

7. The method for producing an electric motor according to claim 6, wherein said coating layer (25) is made from a phenol type epoxy powdery coating material or a phenol type varnish material.
